(19) Europäisches Patentamt
European Patent Office
Office européen des brevets

(11) Veröffentlichungsnummer: **0 151 945**
**A1**

(12) # EUROPÄISCHE PATENTANMELDUNG

(21) Anmeldenummer: 85100380.6

(22) Anmeldetag: 16.01.85

(51) Int. Cl.⁴: C 07 F 9/58
A 01 N 57/24

(30) Priorität: 28.01.84 DE 3402982

(43) Veröffentlichungstag der Anmeldung:
21.08.85 Patentblatt 85/34

(84) Benannte Vertragsstaaten:
AT BE CH DE FR GB IT LI NL

(71) Anmelder: BAYER AG
Konzernverwaltung RP Patentabteilung
D-5090 Leverkusen 1 Bayerwerk(DE)

(72) Erfinder: Pfister, Theodor, Dr.
Lichtenberger Strasse 30
D-4019 Monheim(DE)

(72) Erfinder: Förster, Heinz, Dr.
Am Eckbusch 47
D-5600 Wuppertal 1(DE)

(72) Erfinder: Eue, Ludwig, Dr.
Paul-Klee-Strasse 36
D-5090 Leverkusen 1(DE)

(72) Erfinder: Schmidt, Robert R., Dr.
Im Waldwinkel 110
D-5060 Bergisch-Gladbach 2(DE)

(72) Erfinder: Santel, Hans-Joachim, Dr.
Gerstenkamp 19
D-5000 Köln 80(DE)

(54) **Phenoxypropionyloxyalkanphosphonsäureester.**

(57) Neue Phenoxypropionyloxyalkanphosphonsäureester der Formel

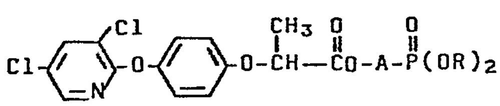

(I)

in welcher
R für gegebenenfalls substituiertes Alkyl steht und
A für gegebenenfalls substituiertes Alkandiyl steht,
mehrere Verfahren zur Herstellung dieser neuen Stoffe und deren Verwendung als Herbizide.

EP 0 151 945 A1

0151945

BAYER AKTIENGESELLSCHAFT
Konzernverwaltung RP
Patentabteilung

5090 Leverkusen, Bayerwerk

Dü/ABc

Ib

## Phenoxypropionyloxyalkanphosphonsäureester

Die Erfindung betrifft neue Phenoxypropionyloxyalkanphosphonsäureester, mehrere Verfahren zu ihrer Herstellung und ihre Verwendung als Herbizide.

Es ist bereits bekannt geworden, daß zahlreiche Phenoxypropionsäure-Derivate herbizide Eigenschaften besitzen (vgl. DE-OS 22 23 894). So kann zum Beispiel der 2-[4-(2,4-Dichlorphenoxy)-phenoxy]-propionsäuremethylester zur Unkrautbekämpfung eingesetzt werden. Die Wirkung dieses Stoffes ist jedoch insbesondere beim Einsatz niedriger Aufwandmengen nicht immer ausreichend.

Es wurden nun neue Phenoxypropionyloxyalkanphosphonsäureester der Formel (I),

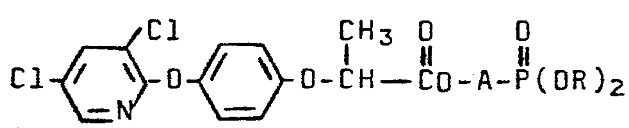

(I)

in welcher

R für gegebenenfalls substituiertes Alkyl steht und

A für gegebenenfalls substituiertes Alkandiyl steht,

gefunden.

Die Phenoxypropionyloxyalkanphosphonsäureester der Formel (I) enthalten mindestens ein asymmetrisch substituiertes Kohlenstoffatom und können deshalb in verschiedenen enantiomeren Formen vorliegen. Die Erfindung betrifft sowohl die einzelnen möglichen Isomeren als auch Gemische dieser Isomeren.

Weiterhin wurde gefunden, daß man die neuen Phenoxypropionyloxyalkanphosphonsäureester der Formel (I) erhält, wenn man

a) 2-/4-(3,5-Dichlorpyridin-2-yloxy)-phenoxy/-propionsäurechlorid der Formel (II)

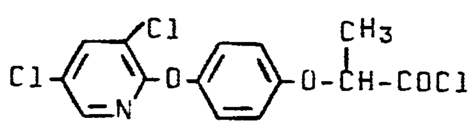

(II)

mit Hydroxyalkanphosphonsäureestern der Formel (III),

$$HO{-}A{-}\overset{O}{\overset{\|}{P}}(OR)_2 \qquad \text{(III)}$$

in welcher
R und A die oben genannten Bedeutungen haben,

gegebenenfalls in Gegenwart eines Säureakzeptors und gegebenenfalls in Gegenwart eines Verdünnungsmittels umsetzt, oder

b) Hydroxyalkanphosphonsäureester der Formel III,

$$HO{-}A{-}\overset{O}{\overset{\|}{P}}(OR)_2 \qquad \text{(III)}$$

in welcher

R und A die oben angegebenen Bedeutungen haben,

mit Halogenpropionylhalogeniden der Formel (IV),

$$Hal{-}\overset{CH_3}{\overset{|}{C}}H{-}\overset{O}{\overset{\|}{C}}{-}Hal' \qquad \text{(IV)}$$

in welcher
Hal und Hal' unabhängig voneinander für Chlor oder Brom stehen,

gegebenenfalls in Gegenwart eines Säurebindemittels sowie gegebenenfalls in Gegenwart eines Verdünnungsmittels umsetzt und die dabei entstehenden Propionyloxyalkanphosphonsäureester der Formel (V),

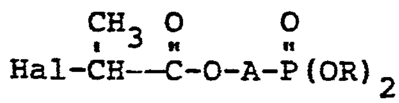

(V)

in welcher

R, A und Hal die oben angegebenen Bedeutungen haben,

mit 4-(3,5-Dichlor-pyridin-2-yloxy)-phenol der Formel (VI),

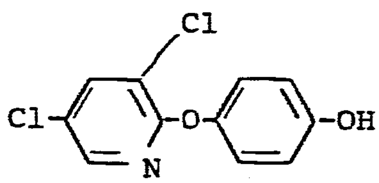

(VI)

gegebenenfalls in Gegenwart eines Säurebindemittels und gegebenenfalls in Gegenwart eines Verdünnungsmittels umsetzt.

Schließlich wurde gefunden, daß sich die neuen Phenoxypropionyloxyalkanphosphonsäureester der Formel (I) durch eine hervorragende herbizide Wirksamkeit auszeichnen.

Überraschenderweise besitzen die erfindungsgemäßen Phenoxypropionyloxyalkanphosphonsäureester der Formel (I) wesentlich bessere herbizide Eigenschaften als der aus dem

Stand der Technik bekannte 2-[4-(2,4-Dichlorphenoxy)-phenoxy]-propionsäuremethylester, welcher ein hochwirksamer Wirkstoff gleicher Wirkungsart ist.

Die erfindungsgemäßen Phenoxypropionyloxyalkanphosphonsäureester sind durch die Formel (I) eindeutig definiert. In dieser Formel steht

R vorzugsweise für gegebenenfalls durch Halogen substituiertes Alkyl mit 1 bis 6 Kohlenstoffatomen und

A steht vorzugsweise für gegebenenfalls substituiertes Alkandiyl mit 1 bis 6 Kohlenstoffatomen. Als Substituenten kommen vorzugsweise in Frage: Alkyl mit 1 bis 4 Kohlenstoffatomen, Pyridyl oder gegebenenfalls einfach bis dreifach durch Fluor, Chlor, Brom, Nitro, $C_1$-$C_4$-Alkyl, $C_1$-$C_4$-Alkoxy, Halogen-$C_1$-$C_4$-Alkyl, Halogen-$C_1$-$C_4$-Alkoxy, Phenoxy und/oder Methylendioxy substituiertes Phenyl.

Besonders bevorzugt sind die Verbindungen der Formel (I), in denen

R für gegebenenfalls durch Chlor oder Brom substituiertes Methyl, Ethyl, n-Propyl, i-Propyl, n-Butyl, i-Butyl, sec.-Butyl oder tert.-Butyl steht und

A für $C_1$-$C_2$-Alkandiyl steht, welches gegebenenfalls durch $C_1$-$C_4$-Alkyl, Pyridyl oder gegebenenfalls einfach bis dreifach durch Fluor, Chlor, Brom, Nitro,

$C_1$-$C_4$-Alkyl, $C_1$-$C_2$-Alkoxy, Trifluormethyl, Trifluormethoxy, Phenoxy und/oder Methylendioxy substituiertes Phenyl substituiert sein kann.

Wie bereits oben erwähnt wurde, enthalten die erfindungsgemäßen Verbindungen mindestens ein asymmetrisch substituiertes Kohlenstoffatom in der Seitenkette und können deshalb in zwei enantiomeren Formen vorliegen. In der nachfolgenden Formel ist das asymmetrisch substituierte Kohlenatom durch ein (*) gekennzeichnet.

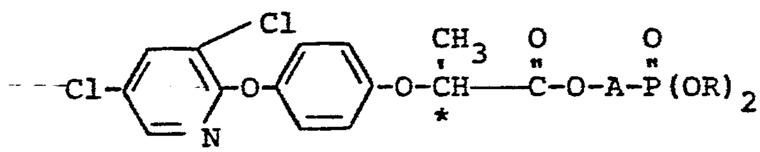

Die Erfindung betrifft sowohl die jeweiligen Racemate als auch die R- und S-Enantiomeren.

Unter R-Enantiomeren (S-Enantiomeren) sind hierbei jeweils diejenigen optisch aktiven Verbindungen zu verstehen, welche am asymmetrisch substituierten Kohlenstoffatom der Propionsäure-Einheit die R-Konfiguration (S-Konfiguration) aufweisen.

Besonders bevorzugt sind die R-Enantiomeren derjenigen Phenoxypropionyloxyalkanphosphonsäureester der Formel (I), in denen R und A die oben als besonders bevorzugt genannten Bedeutungen haben.

Verwendet man 2-/4-(3,5-Dichlor-pyridin-2-yloxy)-phenoxy/-propionsäurechlorid und 2-Hydroxyethanphosphonsäuredimethylester als Ausgangsstoffe, so kann der Verlauf des erfindungsgemäßen Verfahrens (a) durch das folgende Formelschema wiedergegeben werden:

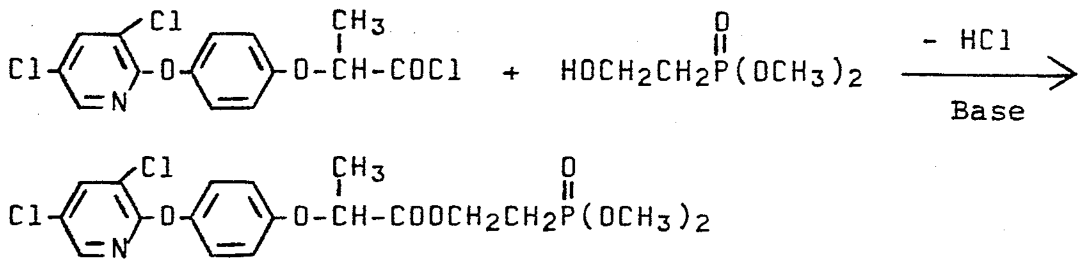


Verwendet man 2-Hydroxyethan-phosphonsäure-diethylester und 2-Chlor-propionylchlorid als Ausgangsstoffe und 4-(3,5-Dichlor-pyridin-2-yloxy)-phenol als Reaktionskomponente, so kann der Verlauf des erfindungsgemäßen Verfahrens (b) durch das folgende Formelschema wiedergegeben werden:

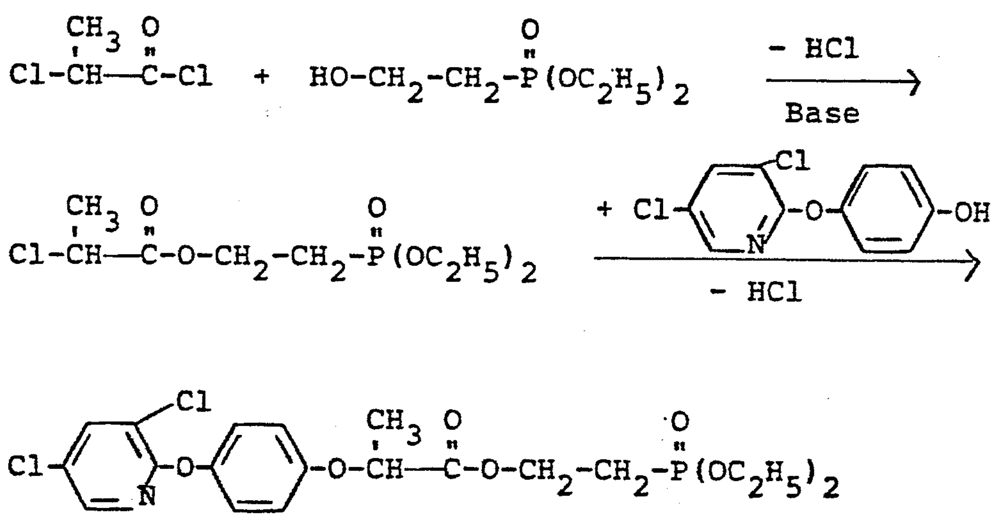

Das bei der Durchführung des erfindungsgemäßen Verfahrens (a) als Ausgangsstoff benötigte 2-/4-(3,5-Dichlor-pyridin-2-yloxy)-phenoxy7-propionsäurechlorid der Formel (II) ist bekannt (vgl. DE-OS 25 46 251).

Zur Herstellung von R- und S-Enantiomeren der Phenoxypropionyl-oxyalkan-phosphonsäureester der Formel (I) werden bei der Durchführung des erfindungsgemäßen Verfahrens (a) das R- bzw. das S-Enantiomere des 2-/4-(3,5-Dichlorpyridin-2-yloxy)-phenoxy7-propionsäurechlorids der Formel (II) benötigt.

Man erhält das R- bzw. S-Enantiomere des 2-/4-(3,5-Dichlorpyridin-2-yloxy)-phenoxy7-propionsäurechlorids der Formel

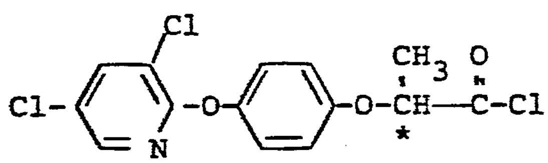

(IIa)

indem man 4-(3,5-Dichlor-pyridin-2-yloxy)-phenol der Formel

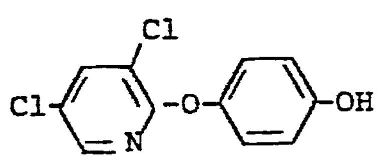

(VI)

mit den S-Enantiomeren bzw. R-Enantiomeren von Propionsäure-Derivaten der Formel

$$Q-\underset{*}{\overset{CH_3}{C}}H-COOR^1 \qquad (VII)$$

in welcher

$R^1$ für Methyl oder Ethyl steht und

Q für Chlor, Brom, Mesylat oder Tosylat steht,

gegebenenfalls in Gegenwart eines Säureakzeptors, wie z.B. Kaliumcarbonat und gegebenenfalls in Gegenwart eines Verdünnungsmittels, wie zum Beispiel Acetonitril, bei Temperaturen zwischen 0°C und 120°C umsetzt und die dabei entstehenden Ester der Formel

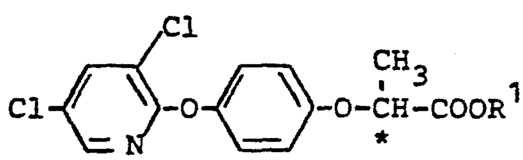

(VIII)

in welcher

$R^1$ die oben angegebene Bedeutung hat,

mit starken Basen, wie zum Beispiel Natriumhydroxid, in Gegenwart eines Verdünnungsmittels, wie zum Beispiel Methanol, Ethanol, Benzol, Toluol oder Xylol, gegebenenfalls im Gemisch mit Wasser bei Temperaturen zwischen 20°C und 140°C verseift, dann mit einer Säure, wie zum Beispiel Salzsäure, ansäuert und die dabei entstehenden enantiomeren Säuren der Formel

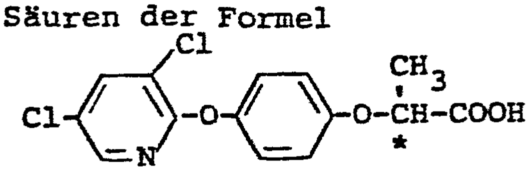

(IX)

mit Chlorierungsmitteln, wie zum Beispiel Thionylchlorid, gegebenenfalls in Gegenwart eines inerten Verdünnungsmittels, wie zum Beispiel Tetrachlormethan, und gegebenenfalls in Gegenwart eines Katalysators, wie zum Beispiel Dimethylformamid, bei Temperaturen zwischen 20°C und 100°C umsetzt.

In der ersten Stufe dieser Umsetzung findet am asymmetrisch substituierten Kohlenstoffatom der Propionsäure-Einheit eine Walden'sche Umkehr statt. Dieses hat zur Folge, daß durch Umsetzung von 4-(3,5-Dichlorpyridin-2-yloxy)-phenol der Formel (VI) mit den S-Enantiomeren der Propionsäure-Derivate der Formel (VII) das R-Enantiomere des 2-[4-(3,5-Dichlorpyridin-2-yloxy)-phenoxy]-propionsäurechlorids der Formel (II) entsteht. Andererseits bildet sich durch Umsetzung von 4-(3,5-Dichlorpyridin-2-yloxy)-phenol der Formel (VI) mit den R-Enantiomeren der Propionsäure-Derivate der Formel (VII) das S-Enantiomere des 2-[4-(3,5-Dichlorpyridin-2-yloxy)-phenoxy]-propionsäurechlorids der Formel (II).

Die beim erfindungsgemäßen Verfahren (a) weiterhin als Ausgangsstoffe benötigten Hydroxyalkanphosphonsäureester sind durch die Formel (III) definiert. In dieser Formel haben R und A vorzugsweise diejenigen Bedeutungen, die bereits im Zusammenhang mit der Beschreibung der erfindungsgemäßen Stoffe der Formel (I) vorzugsweise genannt wurden.

**Als Beispiele für die Verbindungen der Formel (III) seien im einzelnen genannt:**

Tabelle 1 :

$$HO-A-\overset{O}{\overset{\|}{P}}(OR)_2 \qquad (III)$$

| A | R | A | R | A | R |
|---|---|---|---|---|---|
| $-CH_2-$ | $CH_3$ | $-CH-$<br>$CH_3$ | $CH_3$ | $-CH-$<br>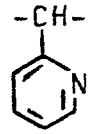 | $CH_3$ |
| $-CH-$<br>$C_2H_5$ | $CH_3$ | $-CH-$<br>$CH_3$ | $C_2H_5$ | $-CH-$<br>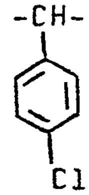 | $CH_3$ |
| $-CH-$<br>$C_3H_7$-i | $CH_3$ | $-CH_2CH_2-$ | $CH_3$ | $-CH-$<br>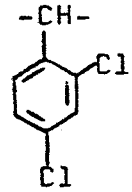 | $CH_3$ |
| $-CH-$<br>$C_3H_7$-n | $CH_3$ | $-CH_2CH_2-$ | $C_2H_5$ | $-CH-$<br>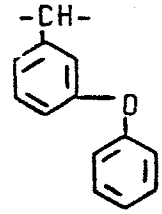 | $C_2H_5$ |
| $-CH-$<br>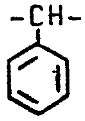 | $CH_3$ | $-CH-$<br>$C_2H_5$ | $C_2H_5$ | $-CH-$<br>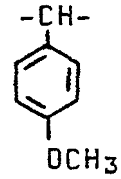 | $C_2H_5$ |
| $-CH-$<br>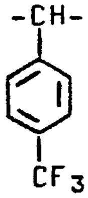 | $CH_3$ | $-CH-$<br>$C_3H_7$-n | $C_2H_5$ | $-CH-$<br>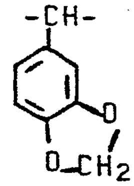 | $CH_3$ |
| $-CH_2-$ | $C_2H_5$ | $-CH-$<br>$C_3H_7$-iso | $C_2H_5$ | | |
| $-CH_2-$ | $CH_2CH_2Cl$ | $-CH-$<br>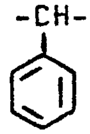 | $C_2H_5$ | | |
| $-CH_2-$ | $C_3H_7$-n | $-CH-$<br>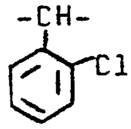 | $CH_3$ | | |
| $-CH_2-$ | $C_3H_7$-iso | $-CH-$<br>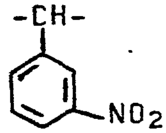 | $CH_3$ | | |
| $-CH_2-$ | $C_4H_9$-n | | | | |
| $-CH_2-$ | $C_4H_9$-iso | | | | |

Die Hydroxyalkanphosphonsäureester der Formel (III) sind bekannt (vgl. Synthesis 1982, 165-166, 653-655 und 916 und DE-OS 3 021 264).

Das Verfahren (a) zur Herstellung der neuen Verbindungen der Formel (I) wird vorzugsweise unter Verwendung geeigneter Verdünnungsmittel durchgeführt. Als solche kommen praktisch alle inerten organischen Solventien in Betracht. Hierzu gehören insbesondere aliphatische und aromatische, gegebenenfalls halogenierte Kohlenwasserstoffe, wie Pentan, Hexan, Heptan, Cyclohexan, Benzol, Toluol, Xylol, Methylenchlorid, Chloroform, Tetrachlorkohlenstoff, Chlorbenzol und Dichlorbenzol, Ether, wie Diethylether, Diisopropylether, 1,2-Dimethoxy-ethan, Tetrahydrofuran und Dioxan, Ester, wie Essigsäuremethylester und -ethylester, Nitrile, wie Acetonitril und Propionitril, Amide, wie Dimethylformamid und Dimethylacetamid, sowie Dimethylsulfoxid und Sulfolan.

Das erfindungsgemäße Verfahren (a) wird vorzugsweise in Gegenwart von Säureakzeptoren durchgeführt. Als solche sind praktisch alle üblichen Säurebindemittel geeignet. Besonders bevorzugt verwendbar sind Alkalimetall- und Erdalkalimetallhydroxide, wie z.B. Natrium-, Kalium- und Calcium-hydroxid, Alkalimetall- und Erdalkalimetall-carbonate bzw. -hydrogen-carbonate, wie z.B. Natrium-carbonat und -hydrogencarbonat, Kaliumcarbonat und Calciumcarbonat, sowie aliphatische, aromatische und heterocyclische Amine, wie z.B. Trimethyl-, Triethyl-, Tripropyl- und Tributyl-amin, N,N-Dimethyl-benzylamin, Pyridin, 2-Methylpyridin, 2,4,6-Trimethyl-pyridin, 2-Methyl-5-ethyl-pyridin,

Diazabicyclooctan (DABCO), Diazabicyclononen (DBN) und Diazabicycloundecen (DBU).

Die Reaktionstemperaturen können bei dem Verfahren (a) innerhalb eines größeren Bereiches variiert werden. Im allgemeinen arbeitet man bei Temperaturen zwischen -50°C und +100°C, vorzugsweise zwischen -20°C und +50°C.

Das Verfahren (a) wird im allgemeinen bei Normaldruck durchgeführt.

Zur Durchführung des erfindungsgemäßen Verfahrens (a) setzt man pro Mol an Ausgangsverbindung der Formel (II) im allgemeinen zwischen 0,8 und 1,5 Mol, vorzugsweise zwischen 1,0 und 1,3 Mol Ausgangsverbindung der Formel (III) ein.

Die Komponenten werden gewöhnlich unter leichtem Kühlen zusammengegeben und das Reaktionsgemisch wird bis zum Reaktionsende gerührt.

Die Aufarbeitung kann nach üblichen Methoden durchgeführt werden, beispielsweise durch Schütteln der Reaktionsmischung mit wäßriger Natriumhydrogencarbonatlösung und einem mit Wasser praktisch nicht mischbaren organischen Lösungsmittel, wie z.B. Methylenchlorid, Trocknen und Filtrieren der organischen Phase und sorgfältiges Abdestillieren flüchtiger Komponenten unter vermindertem Druck, wobei die Produkte der Formel (I) im Rückstand verbleiben.

Die bei dem erfindungsgemäßen Verfahren (b) als Ausgangsstoffe benötigten Hydroxyalkanphosphonsäureester wurden bereits im Zusammenhang mit der Beschreibung des erfindungsgemäßen Verfahrens (a) abgehandelt.

Die bei dem erfindungsgemäßen Verfahren (b) weiterhin als Ausgangsstoffe benötigten Halogenpropionylhalogenide sind durch die Formel (IV) eindeutig definiert. In dieser Formel stehen Hal und Hal' unabhängig voneinander für Chlor oder Brom.

Die Halogenpropionylhalogenide der Formel (IV) sind bekannt.

Zur Herstellung optisch aktiver Verbindungen der Formel (I) werden bei der Durchführung des erfindungsgemäßen Verfahrens (b) die R- bzw. S-Enantiomeren der Halogenpropionylhalogenide der Formel (IV) benötigt. Diese Stoffe sind bekannt oder lassen sich in bekannter Weise nach üblichen Methoden herstellen.

Bei der Umsetzung der R- bzw. S-Enantiomeren der Halogenpropionylhalogenide der Formel (IV) mit Hydroxyalkanphosphonsäureestern der Formel (III) entstehen die entsprechenden optisch aktiven Propionyloxyalkanphosphonsäureester der Formel (V), die dann in der zweiten Stufe des erfindungsgemäßen Verfahrens (b) mit 4-(3,5-Dichlorpyridin-2-yloxy)-phenol der Formel (VI) zur Reaktion gebracht werden. In dieser zweiten Stufe findet am asymmetrisch substituierten Kohlenstoffatom wiederum eine Walden'sche Umkehr statt.

Das bei der Durchführung des erfindungsgemäßen Verfahrens (b) als Reaktionskomponente benötigte 4-(3,5-dichlor-pyridin-2-yloxy)-phenol der Formel (VI) ist bekannt (vgl. DE-OS 27 58 002 und DE-OS 25 46 251).

Als Beispiele für die bei dem erfindungsgemäßen Verfahren (b) als Zwischenprodukte anfallenden Propionyloxyalkanphosphonsäureester der Formel (V) seien im einzelnen genannt:

2-Chlor- und 2-Brom-propionyloxy-methanphosphonsäuredimethylester, -diethylester, -di-n-propylester, -di-iso-propylester, -di-n-butylester und -di-iso-butylester;
1-(2-Chlor-propionyloxy)- und 1-(2-Brom-propionyloxy)-ethanphosphonsäure-dimethylester, -diethylester, -di-n-propylester, -di-iso-propylester, -di-n-butylester und -di-iso-butylester;
1-(2-Chlor-propionyloxy)- und 1-(2-Brom-propionyloxy)-propanphosphonsäure-dimethylester und -diethylester;
1-(2-Chlor-propionyloxy)- und 1-(2-Brom-propionyloxy)-butanphosphonsäure-dimethylester und -diethylester sowie 2-Chlor-propionyloxy- und 2-Brom-propionyloxyphenylmethanphosphonsäure-dimethylester und -diethylester.

Die Propionyloxyalkanphosphonsäureester der Formel (V) sind zum Teil bekannt (vgl. EP-OS 0 073 040).

Bei der Durchführung des erfindungsgemäßen Verfahrens (b) arbeitet man sowohl in der ersten Stufe als auch in der

zweiten Stufe vorzugsweise in Gegenwart eines Säurebindemittels und in Gegenwart eines Verdünnungsmittels. Als Säureakzeptoren und Verdünnungsmittel kommen bei der Durchführung der ersten Stufe des erfindungsgemäßen Verfahrens (b) vorzugsweise diejenigen Säurebindemittel und organischen Solventien in Frage, die bereits im Zusammenhang mit der Beschreibung des erfindungsgemäßen Verfahrens (a) genannt wurden. Als Beispiele für Säurebindemittel und Solvens seien in diesem Zusammenhang Triethylamin bzw. Methylenchlorid genannt.

Als Säureakzeptoren können bei der Durchführung der zweiten Stufe des erfindungsgemäßen Verfahrens (b) vorzugsweise stark basische, jedoch schwach nucleophile Stoffe eingesetzt werden. Bevorzugt in Frage kommen Natriumhydrid, Kaliumhydrid, Calciumhydrid, Natriumcarbonat, Kaliumcarbonat sowie Calciumcarbonat und Diazabicyclooctan (DABCO), Diazabicyclononen (DBN) und Diazabicycloundecen (DBU).

Bei der Durchführung der zweiten Stufe des erfindungsgemäßen Verfahrens (b) können als Verdünnungsmittel vorzugsweise aprotische, polare organische Solventien eingesetzt werden. Bevorzugt in Betracht kommen hierbei Ketone, wie zum Beispiel Aceton, Methylethylketon, Methyl-isopropylketon und Methyl-isobutylketon, ferner Nitrile, und außerdem Amide, wie Dimethylformamid, Dimethylacetamid und N-Methyl-pyrrolidon.

Die Reaktionstemperaturen können auch bei der Durchführung des erfindungsgemäßen Verfahrens (b) innerhalb

eines größeren Bereiches variiert werden. Im allgemeinen arbeitet man bei der Durchführung der ersten Stufe bei Temperaturen zwischen -50°C und +100°C, vorzugsweise zwischen -20°C und +50°C. Bei der Umsetzung in der zweiten Stufe arbeitet man im allgemeinen bei Temperaturen zwischen 0°C und 150°C, vorzugsweise zwischen 20°C und 100°C.

Das erfindungsgemäße Verfahren (b) wird sowohl in der ersten als auch in der zweiten Stufe im allgemeinen unter Normaldruck durchgeführt.

Bei der Durchführung des erfindungsgemäßen Verfahrens (b) setzt man in der ersten Stufe im allgemeinen die Hydroxyalkanphosphonsäureester der Formel (III) und die Halogenpropionylhalogenide der Formel (IV) in angenähert äquimolaren Mengen ein. Es ist jedoch auch möglich, eine der beiden jeweils eingesetzten Komponenten in einem größeren Überschuß zu verwenden. Die Reaktionen werden im allgemeinen in einem geeigneten Verdünnungsmittel in Gegenwart eines Säureakzeptors durchgeführt und das Reaktionsgemisch wird mehrere Stunden bei der erforderlichen Temperatur gerührt. Die Aufarbeitung und die Isolierung der Propionyloxyalkanphosphonsäureester der Formel (V) erfolgt nach üblichen Methoden. Bei der Durchführung der zweiten Stufe des erfindungsgemäßen Verfahrens (b) setzt man auf 1 Mol an 4-(3,5-Dichlor-pyridin-2-yloxy)-phenol der Formel (VI) im allgemeinen zwischen 0,8 und 1,5 Mol, vorzugsweise zwischen 0,95 und 1,2 Mol an Propionyloxyalkanphosphonsäureester der Formel (V) ein. Die Komponenten werden im allgemeinen bei Raumtemperatur zusammengegeben und bei der jeweils erforderlichen Reaktionstemperatur bis zum Ende der Umsetzung gerührt. Die Aufarbeitung erfolgt nach üblichen Methoden. Im allgemeinen geht man so vor, daß man das Reaktionsgemisch gegebenenfalls nach vorherigem Einengen mit Wasser verdünnt, dann mit einem mit Wasser nur wenig mischbaren organischen Lösungsmittel extrahiert, anschließend die organische Phase trocknet und durch sorgfältiges Abdestillieren flüchtiger Komponenten unter vermindertem Druck einengt.

Die erfindungsgemäßen Wirkstoffe können als Defoliants, Desiccants, Krautabtötungsmittel und insbesondere als Unkrautvernichtungsmittel verwendet werden. Unter Unkraut im weitesten Sinne sind alle Pflanzen zu verstehen, die an Orten aufwachsen, wo sie unerwünscht sind. Ob die erfindungsgemäßen Stoffe als totale oder selektive Herbizide wirken, hängt im wesentlichen von der angewendeten Menge ab.

Die erfindungsgemäßen Wirkstoffe können z.B. bei den folgenden Pflanzen verwendet werden.

Dikotyle Unkräuter der Gattungen: Sinapis, Lepidium, Galium, Stellaria, Matricaria, Anthemis, Galinsoga, Chenopodium, Urtica, Senecio, Amaranthus, Portulaca, Xanthium, Convolvulus, Ipomoea, Polygonum, Sesbania, Ambrosia, Cirsium, Carduus, Sonchus, Solanum, Rorippa, Rotala, Lindernia, Lamium, Veronica, Abutilon, Emex, Datura, Viola, Galeopsis, Papaver, Centaurea.

Dikotyle Kulturen der Gattungen: Gossypium, Glycine, Beta, Daucus, Phaseolus, Pisum, Solanum, Linum, Ipomoea, Vicia, Nicotiana, Lycopersicon, Arachis, Brassica, Lactuca, Cucumis, Cucurbita.

Monokotyle Unkräuter der Gattungen: Echinochloa, Setaria, Panicum, Digitaria, Phleum, Poa, Festuca, Eleusine, Brachiaria, Lolium, Bromus, Avena, Cyperus, Sorghum, Agropyron, Cynodon, Monochoria, Fimbristylis, Sagittaria, Eleocharis, Scirpus, Paspalum, Ischaemum, Sphenoclea, Dactyloctenium, Agrostis, Alopecurus, Apera.

Monokotyle Kulturen der Gattungen: Oryza, Zea, Triticum, Hordeum, Avena, Secale, Sorghum, Panicum, Saccharum, Ananas, Asparagus, Allium.

Die Verwendung der erfindungsgemäßen Wirkstoffe ist jedoch keineswegs auf diese Gattungen beschränkt, sondern erstreckt sich in gleicher Weise auch auf andere Pflanzen.

Die Verbindungen eignen sich in Abhängigkeit von der Konzentration zur Totalunkrautbekämpfung z.B. auf Industrie- und Gleisanlagen und auf Wegen und Plätzen mit und ohne Baumbewuchs. Ebenso können die Verbindungen zur Unkrautbekämpfung in Dauerkulturen, z.B. Forst-, Ziergehölz-, Obst-, Wein-, Citrus-, Nuß-, Bananen-, Kaffee-, Tee-, Gummi-, Ölpalm-, Kakao-, Beerenfrucht- und Hopfenanlagen und zur selektiven Unkrautbekämpfung in einjährigen Kulturen eingesetzt werden.

Die erfindungsgemäßen Wirkstoffe können zur selektiven Gräserbekämpfung in Kulturpflanzen wie z.B. Baumwolle, Raps, Sojabohnen, Zuckerrüben sowie in Getreide, wie z.B. Weizen, eingesetzt werden.

Die Wirkstoffe können in die üblichen Formulierungen überführt werden, wie Lösungen, Emulsionen, Spritzpulver, Suspensionen, Pulver, Stäubemittel, Pasten, lösliche Pulver, Granulate, Suspensions-Emulsions-Konzentrate, wirkstoffimprägnierte Natur- und synthetische Stoffe sowie Feinstverkapselungen in polymeren Stoffen.

Diese Formulierungen werden in bekannter Weise hergestellt, z.B. durch Vermischen der Wirkstoffe mit Streckmitteln, also flüssigen Lösungsmitteln und/oder festen Trägerstoffen, gegebenenfalls unter Verwendung von oberflächenaktiven Mitteln, also Emulgiermitteln und/oder Dispergiermitteln und/oder schaumerzeugenden Mitteln.

Im Falle der Benutzung von Wasser als Streckmittel können z.B. auch organische Lösungsmittel als Hilfslösungsmittel verwendet werden. Als flüssige Lösungsmittel kommen im wesentlichen in Frage: Aromaten, wie Xylol, Toluol, oder Alkylnaphthaline, chlorierte Aromaten und chlorierte aliphatische Kohlenwasserstoffe, wie Chlorbenzole, Chlorethylene oder Methylenchlorid, aliphatische Kohlenwasserstoffe, wie Cyclohexan oder Paraffine, z.B. Erdölfraktionen, mineralische und pflanzliche Öle, Alkohole, wie Butanol oder Glycol sowie deren Ether und Ester, Ketone wie Aceton, Methylethylketon, Methylisobutylketon oder Cyclohexanon, stark polare Lösungsmittel, wie Dimethylformamid und Dimethylsulfoxid, sowie Wasser.

Als feste Trägerstoffe kommen in Frage: z. B. Ammoniumsalze und natürliche Gesteinsmehle, wie Kaoline, Tonerden, Talkum, Kreide, Quarz, Attapulgit, Montmorillonit oder Diatomeenerde und synthetische Gesteinsmehle, wie hochdisperse Kieselsäure, Aluminiumoxid und Silikate, als feste Trägerstoffe für Granulate kommen in Frage: z.B. gebrochene und fraktionierte natürliche Gesteine wie Calcit, Marmor, Bims, Sepiolith, Dolomit sowie synthetische Granulate aus anorganischen und organischen Mehlen sowie Granulate aus organischem Material wie Sägemehl, Kokosnußschalen, Maiskolben und Tabakstengeln; als Emulgier- und/oder schaumerzeugende Mittel kommen in Frage: z.B. nichtionogene und anionische Emulgatoren, wie Polyoxyethylen-Fettsäure-Ester, Polyoxyethylen-Fettalkohol-Ether, z.B. Alkylaryl-polyglykolether, Alkylsulfonate, Alkylsulfate, Arylsulfonate sowie Eiweißhydrolysate; als Dispergiermittel kommen in Frage: z.B. Lignin-Sulfitablaugen und Methylcellulose.

Es können in den Formulierungen Haftmittel wie Carboxymethylcellulose, natürliche und synthetische pulvrige, körnige oder latexförmige Polymere verwendet werden, wie Gummiarabicum, Polyvinylalkohol, Polyvinylacetat, sowie natürliche Phospholipide, wie Kephaline und Lecithine und synthetische Phospholipide. Weitere Additive können mineralische und vegetabile Öle sein.

Es können Farbstoffe wie anorganische Pigmente, z.B. Eisenoxid, Titanoxid, Ferrocyanblau und organische Farbstoffe, wie Alizarin-, Azo- und Metallphthalocyaninfarbstoffe und Spurennährstoffe wie Salze von Eisen, Mangan,

Bor, Kupfer, Kobalt, Molybdän und Zink verwendet werden.

Die Formulierungen enthalten im allgemeinen zwischen 0,1 und 95 Gewichtsprozent Wirkstoff, vorzugsweise zwischen 0,5 und 90 %.

Die erfindungsgemäßen Wirkstoffe können als solche oder in ihren Formulierungen auch als Mischungen mit bekannten Herbiziden zur Unkrautbekämpfung Verwendung finden, wobei Fertigformulierung oder Tankmischung möglich ist.

Für die Mischungen kommen bekannte Herbizide wie zum Beispiel 1-Amino-6-ethylthio-3-(2,2-dimethylpropyl)-1,2,5-triazin-2,4-(1H, 3H)-dion oder N-(2-Benzthiazolyl)-N,N'-dimethyl-harnstoff zur Unkrautbekämpfung in Getreide, 4-Amino-3-methyl-6-phenyl-1,2,4-triazin-5-(4H)-on zur Unkrautbekämpfung in Zuckerrüben und 4-Amino-6-(1,1-dimethyl)-3-methylthio-1,2,4-triazin-5-(4H)-on zur Unkrautbekämpfung in Sojabohnen in Frage. Einige dieser Mischungen zeigen überraschenderweise auch synergistische Wirkung.

Auch eine Mischung mit anderen bekannten Wirkstoffen, wie Fungiziden, Insektiziden, Akariziden, Nematiziden, Schutzstoffen gegen Vogelfraß, Pflanzennährstoffen und Bodenstrukturverbesserungsmitteln ist möglich.

Die Wirkstoffe können als solche, in Form ihrer Formulierungen oder den daraus durch weiteres Verdünnen bereiteten Anwendungsformen, wie gebrauchsfertige Lösungen, Suspensionen, Emulsionen, Pulver und Granulate angewandt werden. Die Anwendung geschieht in üblicher Weise, z.B. durch Gießen, Spritzen, Sprühen, Streuen.

Die erfindungsgemäßen Wirkstoffe können sowohl vor als auch insbesondere nach dem Auflaufen der Pflanzen appliziert werden.

Sie können auch vor der Saat in den Boden eingearbeitet werden.

Die aufgewandte Wirkstoffmenge kann in größeren Bereichen schwanken. Sie hängt im wesentlichen von der Art des gewünschten Effektes ab. Im allgemeinen liegen die Aufwandmengen zwischen 0,05 und 10 kg Wirkstoff pro ha, vorzugsweise zwischen 0,1 und 5 kg/ha.

Die Herstellung und die Verwendung der erfindungsgemäßen Stoffe geht aus den nachfolgenden Beispielen hervor.

Herstellungsbeispiele

Beispiel 1

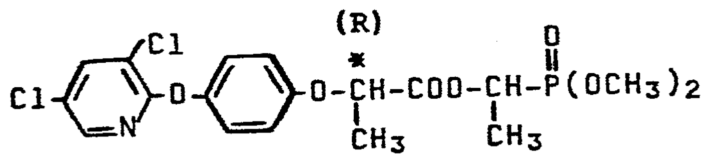

In eine Lösung von 17,3 g (0,05 Mol) des R-Enantiomeren des 2-/4-(3,5-Dichlorpyridin-2-yloxy)-phenoxy/-propionsäurechlorids und 7,9 g (0,1 Mol) Pyridin in 50 ml Toluol wurde bei -15°C eine Lösung von 11,5 g (0,075 Mol) 1-Hydroxy-ethanphosphonsäure-dimethylester in 50 ml Toluol innerhalb einer Stunde unter Rühren eingetropft. Das Reaktionsgemisch wurde 4 Stunden bei -15°C gerührt. Danach wurde aufgearbeitet, indem man das Reaktionsgemisch nacheinander mit 5 %iger wäßriger Salzsäure, mit wäßriger Natriumcarbonat-Lösung und mit Wasser wusch. Die organische Phase wurde abgetrennt, getrocknet und unter vermindertem Druck sorgfältig eingeengt.

Man erhielt 18,5 g (80 % der Theorie) an dem R-Enantiomeren des 2-/4-(3,5-Dichlor-pyridin-2-yloxy)-phenoxy/-propionyloxy-ethanphosphonsäure-dimethylesters vom Brechnungsindex $n_D^{20}$ = 1,5397.

0151945

Beispiel 2

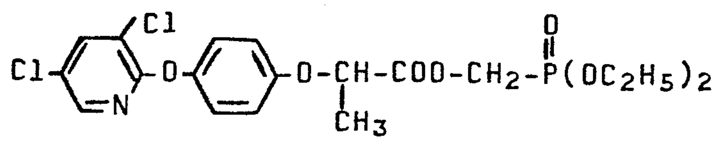

Verfahrensvariante (a):

Eine Lösung von 6,7 g (0,017 Mol) 2-[4-(3,5-Dichlorpyridin-2-yloxy)-phenoxy]-propionsäurechlorid in 50 ml Methylenchlorid wurde zu einer mit Eis gekühlten Mischung aus 3,7 g (0,022 Mol) Hydroxy-methanphosphonsäure-diethylester, 2,0 g (0,02 Mol) Triethylamin und 50 ml Methylenchlorid tropfenweise gegeben. Das Reaktionsgemisch wurde 15 Stunden bei 20°C gerührt und dann mit wäßriger Natriumhydrogencarbonatlösung gewaschen. Die organische Phase wurde abgetrennt, getrocknet und unter vermindertem Druck sorgfältig eingeengt.

Man erhielt 4,1 g (43 % der Theorie) 2-[4-(3,5-Dichlorpyridin-2-yloxy)-phenoxy]-propionyloxy-methanphosphorsäurediethylester vom Brechnungsindex $n_D^{20}$ = 1,5327.

Herstellung des Ausgangsproduktes der Formel:

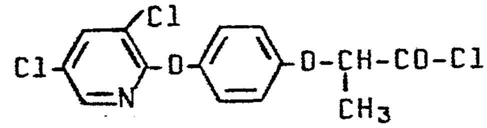

(II)

Eine Mischung aus 25,6 g (0,07 Mol) 2-/4-(3,5-Dichlor-pyridyl-2-oxy)-phenoxy7-propionsäure, 26 g (0,22 Mol) Thionylchlorid und einem Tropfen Dimethylformamid wurde 15 Stunden unter Rückfluß erhitzt. Anschließend wurden die flüchtigen Komponenten bei 60°C (1 mm Hg) entfernt.

Man erhielt auf diese Weise 14,3 g (59 % der Theorie) 2-/4-(3,5-Dichlor-pyridyl-2-oxy)-phenoxy7-propionsäure-chlorid.

Herstellungsverfahren (b):

1. Stufe:

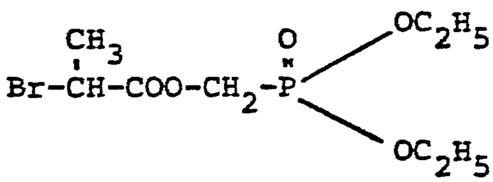

(V-1)

Eine Lösung von 8,6 g (0,05 Mol) 2-Brom-propionsäurechlorid in 30 ml Methylenchlorid wurde tropfenweise zu einer auf 0 bis 10°C gekühlten Mischung aus 8,4 g (0,05 Mol) Hydroxymethanphosphonsäurediethylester, 6,1 g (0,06 Mol) Triethylamin und 30 ml Methylenchlorid gegeben. Das Reaktionsgemisch wurde 20 Stunden bei 10-20°C gerührt, mit wäßriger Natriumhydrogencarbonat-Lösung gewaschen, getrocknet, filtriert und unter vermindertem Druck eingeengt. Man erhielt 4,9 g (32 % der Theorie) 2-Brompropionyloxymethanphosphonsäure-diethylester als öligen Rückstand.

2. Stufe:

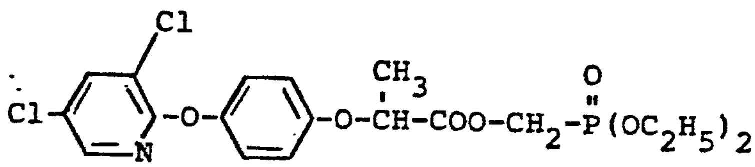

Eine Mischung aus 11,5 g (0,045 Mol) 4-(3,5-Dichlor-pyridin-2-yloxy)-phenol, 13,6 g (0,045 Mol) 2-Brom-propionyloxy-methanphosphonsäure-diethylester, 15 g Kaliumcarbonat und 200 ml Aceton wurde 90 Minuten unter Rückfluß zum Sieden erhitzt, dann im Wasserstrahlvakuum eingeengt und mit Wasser verdünnt. Man extrahierte mit Toluol, trocknete die organische Phase, filtrierte und destillierte das Lösungsmittel unter vermindertem Druck ab.

Man erhielt 9,2 g (43 % der Theorie) 2-/4-(3,5-Dichlor-pyridin-2-yloxy)-phenoxy/-propionyloxy-methanphosphon-säurediethylester als öligen Rückstand.

Nach den in den Beispielen 1 und 2 angegebenen Methoden wurden auch die in der nachstehenden Tabelle 2 aufgeführten Verbindungen hergestellt:

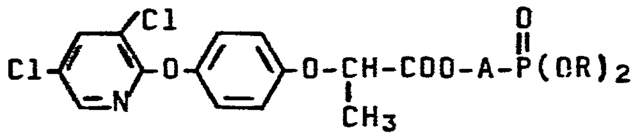

(I)

Tabelle 2 :

| Beisp. Nr. | A | R | Brechungsindex $n_D^{20}$ |
|---|---|---|---|
| 3 | 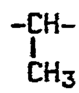 | $C_2H_5$ | 1,5335 |
| 4 | 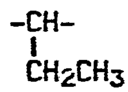 | $C_2H_5$ | 1,5372 |
| 5 | 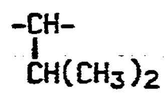 | $C_2H_5$ | 1,5257 |
| 6 | 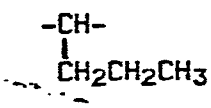 | $C_2H_5$ | 1,5237 |
| 7 | 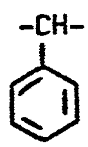 | $C_2H_5$ | 1,5449 |
| 8 | 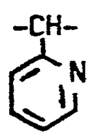 | $CH_3$ | 1,5678 |
| 9 | 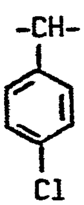 | $CH_3$ | 1,5594 |
| 10 | 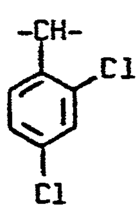 | $CH_3$ | 1,5511 |

Tabelle 2 (Fortsetzung)

| Bsp. Nr. | A | R | Brechungsindex $n_D^{20}$ |
|---|---|---|---|
| 11 | 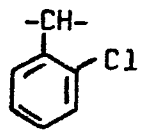 | $C_2H_5$ | 1,5455 |
| 12 | 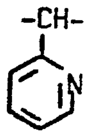 | $C_2H_5$ | 1,5459 |
| 13 | 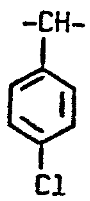 | $C_2H_5$ | 1,5521 |
| 14 | 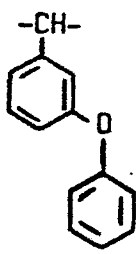 | $C_2H_5$ | 1,5603 |
| 15 | 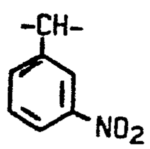 | $C_2H_5$ | 1,5542 |
| 16 | 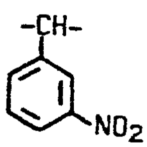 | $CH_3$ | 1,5564 |
| 17 | 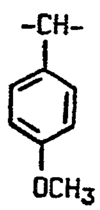 | $CH_3$ | 1,5667 |

| Beisp. Nr. | A | R | Brechungsindex $n_D^{20}$ |
|---|---|---|---|
| 18 | 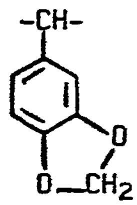 | $C_2H_5$ | 1,5500 |
| 19 | 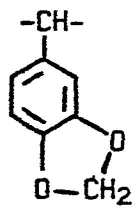 | $CH(CH_3)_2$ | 1,5432 |

Beispiel 20

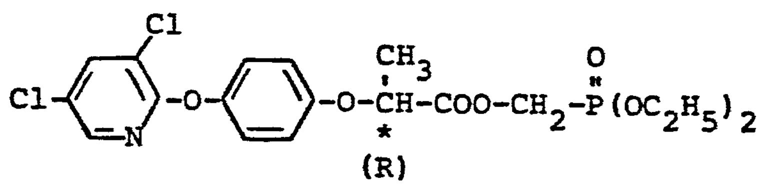

Analog Beispiel 2 wurde ausgehend von R-2-/4-(3,5-Dichlorpyridin-2-yloxy)-phenoxy7-propionsäurechlorid und Hydroxymethanphosphonsäurediethylester der entsprechende R-2-/4-(3,5-Dichlor-pyridin-2-yloxy)-phenoxy7-propionyloxymethanphosphonsäurediethylester vom Brechungsindex $n_D^{20}$ = 1,5433 erhalten.

Beispiel 21

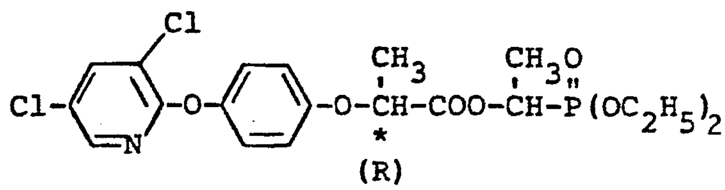

Analog zu den Angaben im Beispiel 2 wurde auch die Verbindung der oben angeführten Struktur hergestellt.

Ausbeute : 62% der Theorie

Brechungsindex: $n_D^{20}$ = 1,5351

Drehwert : $[\alpha]_D^{24}$ = + 12,3°

(1-molare Lösung in Chloroform; Küvettenlänge 10 cm)

Verwendungsbeispiel

In dem nachstehend beschriebenen biologischen Test wurde die folgende Verbindung als Vergleichssubstanz eingesetzt:

(A) =

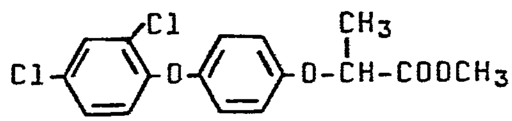

2-/4-(2,4-Dichlorphenoxy)-phenoxy7-propionsäure-methylester
(bekannt aus DE-OS 22 23 894)

Beispiel A

Post-emergence-Test

Lösungsmittel: 5 Gewichtsteile Aceton
Emulgator: 1 Gewichtsteil Alkylarylpolyglykolether

Zur Herstellung einer zweckmäßigen Wirkstoffzubereitung vermischt man 1 Gewichtsteil Wirkstoff mit der angegebenen Menge Lösungsmittel, gibt die angegebene Menge Emulgator zu und verdünnt das Konzentrat mit Wasser auf die gewünschte Konzentration.

Mit der Wirkstoffzubereitung spritzt man Testpflanzen, welche eine Höhe von 5 - 15 cm haben so, daß die jeweils gewünschten Wirkstoffmengen pro Flächeneinheit ausgebracht werden. Die Konzentration der Spritzbrühe wird so gewählt, daß in 2000 l Wasser/ha die jeweils gewünschten Wirkstoffmengen ausgebracht werden. Nach drei Wochen wird der Schädigungsgrad der Pflanzen bonitiert in % Schädigung im Vergleich zur Entwicklung der unbehandelten Kontrolle.
Es bedeuten:

0 % = keine Wirkung (wie unbehandelte Kontrolle)
100 % = totale Vernichtung

In diesem Test zeigten die Wirkstoffe gemäß Beispiel (1) und (2) bei der Bekämpfung von Avena fatua, Digitaria, Echinochloa und Setaria in Zuckerrüben, Baumwolle und Soja eine bessere selektive herbizide Wirksamkeit als die Vergleichssubstanz (A).

Patentansprüche

1. Phenoxypropionyloxyalkanphosphonsäureester der Formel

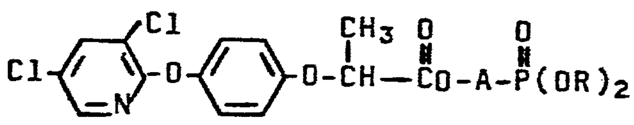 (I)

in welcher

R für gegebenenfalls substituiertes Alkyl steht und

A für gegebenenfalls substituiertes Alkandiyl steht.

2. Phenoxypropionyloxyalkanphosphonsäureester der Formel (I), in denen

R für gegebenenfalls durch Halogen substituiertes Alkyl mit 1 bis 6 Kohlenstoffatomen steht und

A für Alkandiyl mit 1 bis 6 Kohlenstoffatomen steht, wobei jeder dieser Alkandiyl-Reste substituiert sein kann durch Alkyl mit 1 bis 4

Kohlenstoffatomen, Pyridyl und/oder durch Phenyl, welches seinerseits einfach bis dreifach durch Fluor, Chlor, Brom, Nitro, Alkyl mit 1 bis 4 Kohlenstoffatomen, Alkoxy mit 1 bis 4 Kohlenstoffatomen, Halogenalkyl mit 1 bis 4 Kohlenstoffatomen, Halogenalkoxy mit 1 bis 4 Kohlenstoffatomen, Phenoxy und/oder Methylendioxy substituiert sein kann.

3. Verfahren zur Herstellung von Phenoxypropionyloxyalkanphosphonsäureestern der Formel

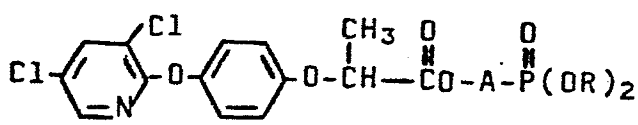

(I)

in welcher

R für gegebenenfalls substituiertes Alkyl steht und

A für gegebenenfalls substituiertes Alkandiyl steht,

dadurch gekennzeichnet, daß man

a) 2-/4-(3,5-Dichlorpyridin-2-yloxy)-phenoxy7-propionsäurechlorid der Formel

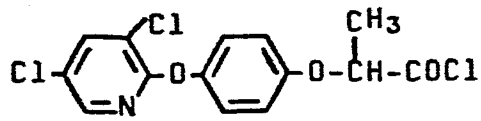

(II)

mit Hydroxyalkanphosphonsäureestern der Formel

$$HO\text{-}A\text{-}\overset{O}{\overset{\|}{P}}(OR)_2 \qquad (III)$$

in welcher

R und A die oben genannten Bedeutungen haben,

gegebenenfalls in Gegenwart eines Säureakzeptors und gegebenenfalls in Gegenwart eines Verdünnungsmittels umsetzt,

oder

b) Hydroxyalkanphosphonsäureester der Formel

$$HO\text{-}A\text{-}\overset{O}{\overset{\|}{P}}(OR)_2 \qquad (III)$$

in welcher

R und A die oben angegebenen Bedeutungen haben,

mit Halogenpropionylhalogeniden der Formel

$$\mathrm{Hal{-}\overset{\displaystyle CH_3}{\overset{|}{C}}H{-}\overset{\displaystyle O}{\overset{\|}{C}}{-}Hal'} \qquad \text{(IV)}$$

in welcher

Hal und Hal' unabhängig voneinander für Chlor oder Brom stehen,

gegebenenfalls in Gegenwart eines Säurebindemittels sowie gegebenenfalls in Gegenwart eines Verdünnungsmittels umsetzt und die dabei entstehenden Propionyloxyalkanphosphonsäureester der Formel

$$\mathrm{Hal{-}\overset{\displaystyle CH_3}{\overset{|}{C}}H{-}\overset{\displaystyle O}{\overset{\|}{C}}{-}O{-}A{-}\overset{\displaystyle O}{\overset{\|}{P}}(OR)_2} \qquad \text{(V)}$$

in welcher

R, A und Hal die oben angegebenen Bedeutungen haben,

mit 4-(3,5-Dichlor-pyridin-2-yloxy)-phenol der Formel

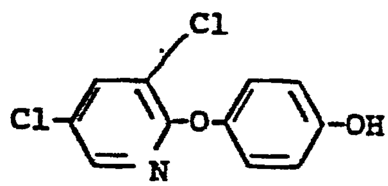

(VI)

gegebenenfalls in Gegenwart eines Säurebindemittels und gegebenenfalls in Gegenwart eines Verdünnungsmittels umsetzt.

4. Herbizide Mittel, gekennzeichnet durch einen Gehalt an mindestens einem Phenoxypropionyloxyalkanphosphonsäureester der Formel (I).

5. Verfahren zur Bekämpfung von Unkräutern, dadurch gekennzeichnet, daß man Phenoxypropionyloxyalkanphosphonsäureester der Formel (I) auf die Unkräuter und/oder deren Lebensraum ausbringt.

6. Verwendung von Phenoxypropionyloxyalkanphosphonsäureestern der Formel (I) zur Bekämpfung von Unkräutern.

7. Verfahren zur Herstellung von herbiziden Mitteln, dadurch gekennzeichnet, daß man Phenoxypropionyloxyalkanphosphonsäureester der Formel (I) mit Streckmitteln und/oder oberflächenaktiven Stoffen vermischt.

8. Phenoxypropionyloxyalkanphosphorsäureester der Formel

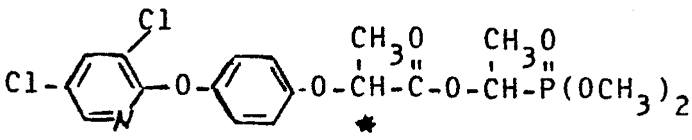

(R)

9. Phenoxypropionyloxyalkanphosphorsäureester der Formel

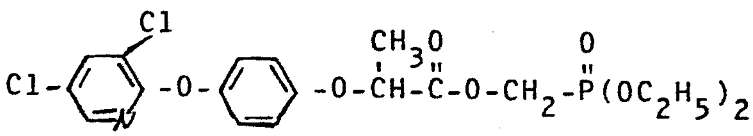

10. Phenoxypropionyloxyalkanphosphorsäureester der Formel

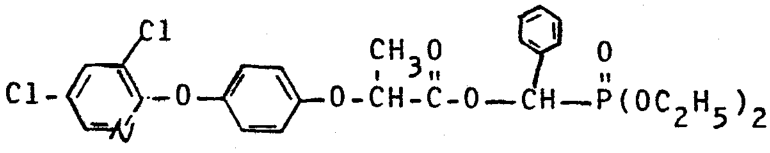

Europäisches Patentamt

# EUROPÄISCHER RECHERCHENBERICHT

0151945

Nummer der Anmeldung

EP 85 10 0380

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (Int. Cl. 4) |
|---|---|---|---|
| | | | C 07 F 9/58<br>A 01 N 57/24 |
| A | EP-A-0 096 354 (BAYER)<br>* Ansprüche 1-8 *<br>--- | 1-9 | |
| D,A | EP-A-0 073 040 (SUMITOMO CHEMICAL)<br>* Anspruch 1 *<br>--- | 1,4 | |
| A,P | EP-A-0 121 871 (HOFFMANN-LA ROCHE)<br>* Anspruch 1 *<br>----- | 1 | |
| | | | RECHERCHIERTE SACHGEBIETE (Int. Cl. 4) |
| | | | C 07 F 9/58 |

Der vorliegende Recherchenbericht wurde für alle Patentansprüche erstellt

| Recherchenort | Abschlußdatum der Recherche | Prüfer |
|---|---|---|
| BERLIN | 08-05-1985 | KAPTEYN H G |

KATEGORIE DER GENANNTEN DOKUMENTEN

X : von besonderer Bedeutung allein betrachtet
Y : von besonderer Bedeutung in Verbindung mit einer anderen Veröffentlichung derselben Kategorie
A : technologischer Hintergrund
O : nichtschriftliche Offenbarung
P : Zwischenliteratur
T : der Erfindung zugrunde liegende Theorien oder Grundsätze

E : älteres Patentdokument, das jedoch erst am oder nach dem Anmeldedatum veröffentlicht worden ist
D : in der Anmeldung angeführtes Dokument
L : aus andern Gründen angeführtes Dokument

& : Mitglied der gleichen Patentfamilie, übereinstimmendes Dokument

EPA Form 1503. 03 82